# EUROPEAN PATENT APPLICATION

(11) **EP 1 039 733 A2**
(43) Date of publication of application: **27.09.2000**
(21) Application number: 00101008.1
(22) Date of filing: 19.01.2000
(51) Int. Cl.: H04M 3/533, H04M 7/00, H04Q 7/00

(54) **Apparatus and method for information communications**

(30) Priority: 22.03.1999 US 273704
(71) Applicant: SHARP KABUSHIKI KAISHA, Osaka 545-8522 (JP)
(72) Inventor: Detlef, Michael John, Vancouver, Washington 98682 (US)
(74) Representative: MÜLLER & HOFFMANN Patentanwälte

(57) **Abstract**

There provided a voice response to an EMail message, wherein the voice response is generated by a thin client device (12) and transmitted to a cellular, or similar, service and then to an internet (32). A voice data conversion section (21) is co-located with a cellular processing system (20), for converting the voice response into a voice data file which is transmitted over the internet (32). An EMail server (36) is connected to the internet (32), for receiving EMail and voice data files. An EMail-to-voicemail gateway (38) for identifying voice data files is provided. A voicemail system (42, 44, 46, 48, 50) for receiving voice data files from said EMail-to-voicemail gateway (38), converting said voice data files into voice streams, and directing said voice streams into a recipient's voicemail box (50).

## Description

### FIELD OF THE INVENTION

This invention relates to an information communications apparatus as a combined voicemail/EMail and private branch exchange (PBX) system, and an information communications method for providing voice response to an EMail message.

### BACKGROUND OF THE INVENTION

Hand-held computing devices with integrated telephones have been available for some time. The purpose of these devices is to allow mobile users to perform simple information-communicating operations, such as sending or receiving electronic mail (hereinafter, referred to as EMail), and accessing information services, without carrying a bulky laptop computer.

Unfortunately, even though these devices are significantly smaller than the equivalent laptop computer/cellular phone combination, they are too bulky to suit the demands of most users, and have therefore been poorly received in the market.

The bulk of these early devices is the perceived requirement of a QWERTY keypad and large, by cellular phone standards, display, usually in the form of a LCD. The developers of these first generation devices believe that these components are necessary in order to support the primary data application: sending and receiving EMail.

In order to appeal to the broader market, it is necessary that these devices support both voice mail and EMail, and that they be equivalent in size and cost to traditional cellular phones.

This is not as difficult as it may seem. First, voice operation is a given. Second, one may argue that EMail sent to mobile users is different than that which is sent to fixed-base users in that the length is generally constrained to several sentences, and attachments are not included.

This difference in message composition exists because present-day wireless devices, such as alphanumeric pagers, typically are not capable of processing attachments, the relatively small display size limits the amount of text that is displayed at one time, and the scrolling capability is limited by user patience.

Alphanumeric paging and digital cellular (DC)/personal communications system (PCS) operators (communications provider) offer infrastructure-based services which allow conventional EMail, up to several hundred characters in length to be routed (transmitted) to wireless users. The 3-4 line screens, present on many high-end DC and PCS voice phones are large enough to allow perusal of short text messages. The reception of an EMail message by a user of a DC/PCS device may be supported on a conventional voice phone platform, already in place.

The problem arises when a user wishes to reply to a message. Dedicated QWERTY keyboards consume excessive space, handwriting recognition is cumbersome, and requires the use of a stylus which is likely to be misplaced, and reliable voice recognition requires resources which cannot be deployed, given the previously-mentioned size and cost constraints.

Key industry players have indicated that future voicemail/EMail products will support a reply mechanism which allows the recipient to view the text-based EMail and then compose a voice memo in reply. The voice memo is captured by the device and stored as a compressed audio file which is then mailed to the message originator. This may be one solution to the problem.

The majority of the voice-related EMail prior art is in the field of voice transmission over the internet, using internet protocol (IP). The prior art disclosed various gateways (means) which offer the inverse to the invention described herein, namely, the conversion of voice-to-data in preparation for real-time transmission across an IP network.

U.S. Patent No. 5,727,058, to Blumhardt et al., granted March 10, 1998 for Apparatus and method for routing communications to a variety of CPE [Customer Premises Equipment] devices, uses a database in the switch to route various call types, voice, fax, data, etc., to the proper type of CPE.

U.S. Patent No. 5,717,742, to Hyde-Thomson, granted February 10, 1998, for Electronic mail system having integrated voice messages, describes a unified in box which allows presentation of voicemail and EMail messages in a consolidated summary "screen".

U.S. Patent No. 5,625,670, to Campana et al., for Electronic mail system with RF communications to mobile processors, describes an EMail system using RF information transport for at least one portion of the overall communication link.

U.S. Patent No. 5,619,684, to Goodwin et al., granted April 8, 1997, for Method and apparatus for consistent user interface in a multiple application personal communications device, describes a MMI (man-machine interface) for a PMC type of device which maintains a consistent look-and-feel independent of the communication link, wired or wireless, in use.

U.S. Patent No. 5,608,786, to Gordon, granted March 4, 1997, for Unified messaging system and method, describes a unified in box system which uses a data network such, as the internet, for intermediate legs.

U.S. Patent No. 5,557,659, to Hyde-Thomson, granted September 17, 1996, for Electronic mail system having integrated voice messages, describes an integrated EMail system which accepts analog voice input from public switched telephone network (PSTN) interface and converts it to text format.

U.S. Patent No. 5,479,411, to Klein, granted December 26, 1995, for Multimedia integrated message arrangement, uses text-to-speech processing to convert text-based EMail to an audio representation which is routed to a voicemail system.

U.S. Patent No. 5,187,735, to Herrero Garcia et al., granted February 16 1993, for Integrated voice-mail based voice and information processing system, describes a system for processing real-time inbound analog voice calls only.

U.S. Patent No. 5,136,291, to Teague, granted April 4, 1992, for Transmitting binary data files using electronic mail, describes a compression method using base-85 compression protocol.

U.S. Patent No. 4,837,798, to Cohen et al., granted June 6, 1989, for Communication system having unified messaging, describes a unified in box system wherein the user must designate the type of retrieval device in use, phone, terminal, etc. A server then formats all messages destined to appear on a specified device.

While the above-mentioned solution may be one solution to the problem, it may not be a viable business solution to those millions of business users throughout the world who continue to use legacy PCs, i.e., x486-based and older equipment, that will not adequately support audio file presentation.

For this scheme to work, the recipient must have access to a multimedia-capable PC in order to playback the reply. Furthermore, most cubicle-resident business users would prefer not to have sensitive EMail "broadcast" to co-workers who happen to be listening nearby.

Neither is the problem solved in the case where a user polls EMail with a DC/PCS device having limited display, and no capability to play a voice file.

### SUMMARY OF THE INVENTION

An object of the invention is to provide an information communications apparatus as a mechanism by which audio EMail replies may be forwarded to a recipient's voicemail box for convenient manipulation.

Another object of the invention is to provide an information communications apparatus (system) and an information communications method for providing replies to EMail messages over a world-wide communications network.

A further object of the invention is to provide an information communications apparatus (system) and an information communications method for providing replies to EMail messages over a world-wide communications network using portions of existing infrastructure.

Another object of the invention is to provide an information communications apparatus (system) and an information communications method for providing replies to EMail messages over a world-wide communications network using existing thin client devices.

In order to solve the above-mentioned problems, an information communications apparatus of the present invention is an information communications apparatus for providing over a communications network a reply signal including a voice reply signal to an EMail message received by a communications-use thin client device, including:
a conversion mechanism for converting the voice reply signal into a voice data file which is transmitted to the communications network, said conversion mechanism being located at a communications interconnecting point for the thin client device;
an EMail server, connected to the communications network, for transmitting and receiving EMail and the voice data file;
identification means for identifying the voice data file from the reply signal;
a voicemail interface for receiving the voice data file from said identification means and converting said voice data file into a voice stream;
a voicemail system, including a recipient's voicemail box, for directing said voice stream into the recipient's voicemail box.

The above structure includes the conversion mechanism, the identification means, the voicemail interface are provided, the EMail server which is arranged to receive the voice data file, and a voicemail system for directing the voice stream from the voice data file into the recipient's voicemail box. It is thus possible to transmit the voice reply signal by the voice stream through the voice data file from the communications-use thin client device to the recipient's voicemail box, and communicate with the recipient, in reply to the EMail message.

Further, the provision of the conversion mechanism at the communications interconnecting point in the above structure eliminates the necessity to provide the conversion mechanism for the thin client device. Therefore, the voice reply to the EMail received by the thin client device can be easily achieved, and the increase in the size of the thin client device can be prevented.

It is preferable that the information communications apparatus further includes a lookup table for correlating a recipient's voicemail box address with a recipient's EMail address. With this structure, since the lookup table is provided, the voicemail box address can be surely obtained from the EMail address, thereby enabling the easy implementation of the voice mail.

It is preferable that the information communications apparatus further includes an attaching mechanism for attaching said voice data file to a reply EMail message. With this structure, since the attaching mechanism is provided, the transmittance of the voice data file over existing communications networks can be achieved more quickly and easily with lower cost.

It is preferable that, in the information communications apparatus, the identification means is located at the EMail server. With this structure, since the identification means is located at the EMail server near to the recipient side, it is possible to identify and transmit the voice data file quickly and surely.

It is preferable that, in the information communications apparatus, the EMail server includes a splitting mechanism for splitting an attached voice mail data file from the EMail reply message.

With this structure, since the splitting mechanism is located at the EMail server near to the recipient side, it is possible to split and transmit the voice data file quickly and surely.

An information communications method of the present invention is an information communications method generating a voicemail message with a communications-use thin client device and transmitting the voicemail message over an EMail system, including the steps of: sending a voice mail message over a wireless phone system; converting the voice mail message into a voice data file; transmitting the voice data file over an communications network; receiving the voice data file at an EMail server; separating the voice data file from an EMail file; changing the voice data file into a voice stream; and directing the voice stream to a recipient's voicemail box.

With the above method, since the voicemail message is converted into the voice data file after a voice mail message is sent over a wireless phone system, the conversion can be performed at devices other than the thin client device, such as at interconnecting points for a wireless phone system. Therefore, the voice reply to the EMail received by the thin client device can be easily achieved, and the increase in the size of the thin client device can be prevented.

It is preferable that, in the information communications method, the step of transmitting includes transmitting the voice data file as an attachment to an EMail message.

With this method, since the voice data file is transmitted as an attachment to an EMail message, the transmittance of the voice data file over existing communications networks such as the internet can be achieved more quickly and easily with lower cost.

It is preferable that, in the information communications method, the step of separating includes using a lookup table to locate a recipient's voicemail box address from a recipient's EMail address.

With this method, since the lookup table is used, the voicemail box address can be surely obtained from the EMail address, thereby enabling the easy implementation of the voice mail.

It is preferable that, in the information communications method, the step of transmitting includes transmitting a voice message as an EMail message.

With this method, since the voice message is transmitted as an EMail message, the transmittance of the voice message over existing communications networks such as the internet can be achieved more quickly and easily with lower cost.

Another information communications method of the present invention is an information communications method comprising the step of transmitting a voice message for use in an EMail over a communications network such as an internet, as a voice data file that is attached to an EMail message.

With this method, the voice message is transmitted as a voice data file that is attached to an EMail message, i.e., the voice message is converted into the voice data file and transmitted. Therefore, the transmittance of the voice message can be faster. Further, since the existing communications network are available, the transmittance of the voice message can be more easily with lower cost.

It is preferable that, in the information communications method, a voicemail server is connected to the communications network. With this method, the voice data file can be transmitted over the communications network to the voicemail server quickly and surely. It is thus possible to transmit the voice message in response to the voice data file over the voicemail server to the recipient more surely and quickly.

It is preferable that the information communications method further includes the step of separating the voice data file from the EMail message and converting the voice data file to a voice stream for storage in a voicemail box.

With this method, the voice data file is separated from the EMail message and the voice data file is converted to a voice stream for storage in a voicemail box. It is thus possible to store the voice stream in the voicemail box more surely, and ensure the recipient's invoking the voice stream from the voicemail box arbitrarily.

It is acceptable that the information communications method further includes the step of converting the voice data file to a voice stream for storage in a voicemail box.

With this method, the voice data file is converted to a voice stream for storage in a voicemail box. It is thus possible to store the voice stream in the voicemail box more surely, and ensure the recipient's invoking the voice stream from the voicemail box arbitrarily.

These and other objects and advantages of the invention will become more fully apparent as the description which follows is read in conjunction with the drawing.

For a fuller understanding of the nature and advantages of the invention, reference should be made to the ensuing detailed description taken in conjunction with the accompanying drawings.

### BRIEF DESCRIPTION OF THE DRAWINGS

Fig. 1 is a block diagram of the apparatus for information communications of the invention.
Fig. 2 is a block diagram of the thin client device of the apparatus.

### DESCRIPTION OF THE EMBODIMENTS

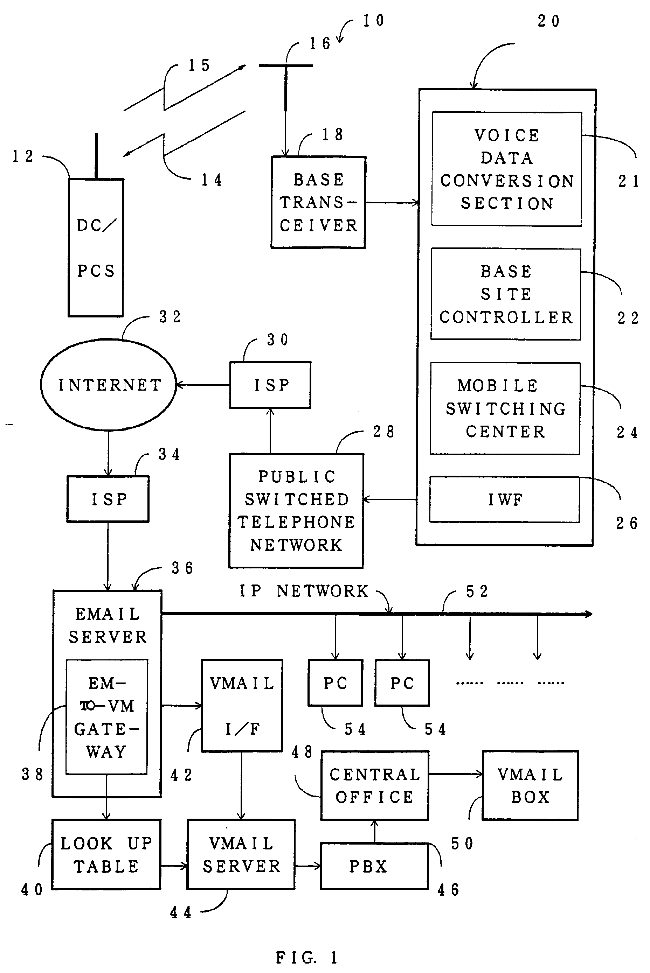

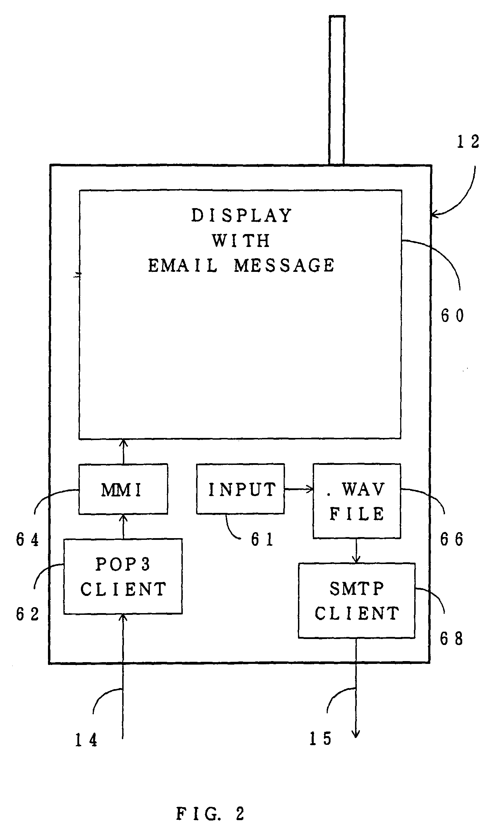

Referring to Figs. 1 and 2, the following descriptions will explain one embodiment of an apparatus for information communications of the present invention.

The invention relates to an information communications apparatus having an EMail-to-voicemail gateway. This invention relates to an infrastructure/server-based information communications apparatus. However, the overall system of the apparatus relies upon the existence of thin mobile communications devices (client devices) which allow the user to: (1) originate and/or reply to EMail by selecting the recipient through conventional means, such as directory look-up, etc.; (2) create a voice memo which is encoded using a de facto standard method; (3) attach the encoded voice memo to an EMail message (attaching mechanism); and (4) mail the EMail message to the intended recipient.

The invention is a server-based hardware/software system which identifies attached audio files on inbound EMail and diverts the audio portion to an associated voicemail box. The recipient may then review the EMail reply in privacy using the existing voicemail message manipulation facilities.

The invention provides an information communications apparatus and an information communications method as a low cost system and method which preserves the small form factor of a traditional cellular phone (mobile phone). In fact, a number of cellular phones and most PDAs (personal digital assistances), also referred to herein as "thin client devices," already offer a stand-alone voice memo function. The processing power required to convert captured audio into one of the common audio distribution file formats is minimal. Portable devices exist in the market today which contain all of the hardware elements necessary to perform this operation.

The system of the invention includes the following components:
(1) an EMail server having protocols, such as simple mail transfer protocol (SMTP), for sending mail and post office protocol Ver.3 (POP3) for receiving mail;
(2) an attachment processing mechanism which copies and decodes attached audio files;
(3) a database which links EMail recipient identification with voicemail box address; and
(4) a hardware interface to access the voicemail system and load decoded audio messages into specific voicemail box addresses.

Referring now to Fig. 1, the system, i.e., an information communications apparatus of the invention is depicted generally at 10. System (information communications apparatus) 10 includes a DC/PCS, or other thin client device 12 (device 12) which, for purposes of this invention, receives EMail message signals 14 from an antenna 16, and transmits voice reply signals 15 to such messages to antenna 16 (the device is shown by DC/PCS in Fig. 1). Antenna 16 is connected to a base transceiver 18, which in turn is connected to a cellular processing system 20. As this disclosure is concerned with the generation of a voice signal from device 12 which will ultimately appear in a recipient's voicemail box, signal flow is shown in Fig. 1 in one direction only.

Cellular processing system 20 includes the conventional base site controller 22, a mobile switch center 24, an inter-working function (IWF) 26, and a voice data conversion section (conversion mechanism) 21 for converting the voice reply signal 15 into a voice data file preferable for identification and transmission to a world-wide communications network such as an internet 32 described below.

Voice reply signal 15 is generated by a user of the thin client device 12 with using a voice memo function, etc., and sent to the cellular processing system 20 by a user of device 12, in response to a received EMail message that the user viewed on a display screen of device 12. As the voice message is sent as the voice reply signal 15 in reply to an EMail message, the EMail address of the original sender, soon-to-be recipient, is known to device 12. Voice reply signal 15 includes an EMail reply directed to the original sender, and a voice message reply, in the form of an attachment to the reply EMail generated by device 12.

System 20 is connected to a public switched telephone network (PSTN) 28, which is connected, possibly through an internet service provider (ISP) 30, to a world-wide communications network known as the internet 32. Internet 32 connects to a receiving ISP 34, which provides service to an EMail server 36 (server 36), probably located at a business location.

EMail server 36 includes therein an EMail-to-voicemail gateway (identification means) 38, which distinguishes conventional EMail messages from those messages generated by device 12 which are intended, ultimately, to reach a recipient's voicemail box.

Special purpose EMail-to-voicemail gateway 38 allows EMail messages, with attached voice data files, to be specially processed such that the voice content portion may be converted back to audio and forwarded to the recipient's voicemail box.

A lookup table 40 is provided as a data base to link EMail addresses with voicemail box locations. The voice data file, as received in server 36, is separated by the EMail-to-voicemail gateway 38 from the EMail reply, and is transformed into a voice stream by a voicemail interface 42 (shown by I/F in the drawing), transmitted to the voicemail system 44 and then to a PBX (Private Branch exchange) 46.

Lookup table 40 contains a list of EMail addresses for company personnel and voice mail box addresses associated with each person. This provides a direction for the voice stream as the voice mail message that has been separated from the EMail reply, and the direction is set by the EMail address of the EMail reply.

This server hardware/software solution at the EMail server 36 allows attached the voice stream as the voice memos to be stripped from inbound EMail and redirected to the voicemail box 50 associated with the EMail recipient. This solves the conventional problems associated with privacy concerns. Diverting the reply to voicemail further enhances the utility (convenience) of the message, as traditional voice message manipulation tools, such as play, rewind, speed-up, forward, etc., may then be applied.

The voice stream is then sent to a central office 48 and into the recipient's voicemail box 50, where the recipient may poll this voicemail response as the recipient would poll any other voicemail message.

Server 36 transmits the EMail reply to which the voice data file was attached as conventional EMail to an EMail network 52, and to conventional EMail client devices (terminal devices), such as PCs 54. The presence of such an EMail reply may be one notice that the recipient has voicemail in the associated voicemail box.

Referring now to Fig. 2, device 12 is shown in greater detail. It will be appreciated that only those components of device 12 necessary to explain the invention hereof are depicted in the figure. Device 12 received EMail message signal 14, which is routed to a POP3 client 62, and then to a MMI 64, whereupon it is displayed on display 60.

Device 12 includes an input section 61 as some form of command mechanism, such as a key or voice command and commands toward a menu display that is displayed on the display 60, to generate a reply signal to the displayed EMail message through the input section 61.

The reply includes, in the preferred embodiment, a .wav file 66, or other audio file, which is transmitted so as to send the reply signal as an attachment to the reply EMail. The reply signal is handled by SMTP client 68 and leaves device 12 as voice reply signal 15. The .wav file 66 and the SMTP client 68 also function as the attaching mechanism for attaching a voice reply signal (voice message) to an EMail reply.

From an implementation standpoint, it is clear that the primary task of the system is modifying SMTP server 36 software portion of the corporate EMail gateway (EMail-to-voicemail gateway 38) and implementing lookup table function 40 to allow the EMail-to-voicemail conversion.

Specific algorithms and/or protocols are required for the EMail server 36 to exchange the voice data file content with the voicemail server 44. Taking a least common denominator approach, it may be assumed that interface 42 to the voicemail system will be through a plain old telephone system (POTS) interface with dual tone multi frequency (DTMF) signaling.

The voicemail interface hardware may then be little more than a data access arrangement (DAA), which may be controlled by software on the corporate EMail server 36.

More powerful voicemail systems may allow varying degrees of network connectivity such that the interface hardware function is unnecessary. Some voicemail systems already have IP access for administration purposes, such as provisioning, extracting call records, etc.

It is preferable that the EMail server 36 in the information communications apparatus and information communications method of the present invention includes server hardware and software which performs the following functions:
(1) monitor the arrival of inbound EMail messages;
(2) identify the voice data files as embedded voice memo components;
(3) convert said voice data file as the voice memo component to a format suitable for transfer to voicemail server, i.e., the voice stream;
(4) lookup voicemail box number using destination EMail address as a key, based on the lookup table 40;
(5) initiate session (i.e., information communications) with voicemail server 44; and
(6) transfer the voice stream as the converted voice memo to voicemail system.

As described above, the EMail server 36 is provided with the main function as the conversion mechanism. This allows the omission of the structure for providing the functions in the thin client device 12, thereby preventing the increase in the size of the thin client device 12.

Although a preferred embodiment of the system and method of the invention have been disclosed herein, it will be appreciated that further variations and modification may be made thereto without departing from the scope of the invention as defined in the appended claims.

The information communications apparatus of the present invention may be a system for providing a voice response to an EMail message, wherein the voice response is generated by a thin client device and transmitted to a cellular service and then to a world-wide communications network, comprising: (1) a conversion mechanism co-located with the cellular service for converting the voice response into a voice data file which is transmitted over the world-wide communications network; (2) an EMail server connected to the world-wide communications network for receiving conventional EMail and voice data files; (3) an EMail-to-voicemail gateway for identifying voice data files; (4) a voicemail interface for receiving voice data files from said EMail-to-voicemail gateway and converting said voice data files into voice streams; (5) a voicemail system, including recipient voicemail boxes; for directing said voice streams into a recipient's voicemail box.

The information communications method of the present invention may be a method of generating a voicemail message with a thin client device and transmitting that voicemail message over an EMail system, comprising the steps of: (1) sending a voice mail message over a wireless phone system; (2) converting the voice mail message into a voice data file; (3) transmitting the voice data file over a world-wide communications network; (4) receiving the voice data file at an EMail server; (5) separating the voice data file from EMail files; (6) changing the voice data file into a voice stream; and (7) directing the voice stream to a recipient's voicemail box.

The above descriptions are made by taking as an example the arrangement where the voice data conversion section 21 is located at the cellular processing system 20 as the terminal interconnecting point of the cellular phone (mobile phone). However, the location of the voice data conversion section 21 is not limited to that point, and may be at any interconnecting points between the cellular processing system 20 and the EMail server 36, such as a central interconnecting point that integrates a plurality of terminal interconnecting points.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An information communications apparatus for providing over a communications network (32) a reply signal including a voice reply signal to an EMail message received by a communications-use thin client device (12), comprising:
a conversion mechanism (21) for converting the voice reply signal into a voice data file which is transmitted to the communications network (32), said conversion mechanism (21) being located at a communications interconnecting point (20) for the thin client device (12);
an EMail server (36), connected to the communications network (32), for transmitting and receiving EMail and the voice data file;
identification means (38) for identifying the voice data file from the reply signal;
a voicemail interface (42) for receiving the voice data file from said identification means (38) and converting said voice data file into a voice stream;
a voicemail system (44, 46, 48), including a recipient's voicemail box (50), for directing said voice stream into the recipient's voicemail box (50).

2. The information communications apparatus of claim 1, further comprising a lookup table (40) for correlating a recipient's voicemail box address with a recipient's EMail address.

3. The information communications apparatus of claim 1 or 2, further comprising an attaching mechanism for attaching said voice data file to a reply EMail message.

4. The information communications apparatus of any one of claims 1 through 3,
wherein said identification means (38) is located at said EMail server (36).

5. The information communications apparatus of any one of claims 1 through 4,
wherein said EMail server (36) includes a splitting mechanism for splitting an attached voice mail data file from said EMail reply message.

6. An information communications method generating a voicemail message with a communications-use thin client device (12) and transmitting the voicemail message over an EMail system, comprising the steps of:
sending a voice mail message over a wireless phone system;
converting the voice mail message into a voice data file;
transmitting the voice data file over an communications network (32);
receiving the voice data file at an EMail server (36);
separating the voice data file from an EMail file;
changing the voice data file into a voice stream; and
directing the voice stream to a recipient's voicemail box (50).

7. The information communications method of claim 6,
wherein said step of transmitting includes transmitting the voice data file as an attachment to an EMail message.

8. The information communications method of claim 6 or 7,
wherein said step of separating includes using a lookup table (40) to locate a recipient's voicemail box address from a recipient's EMail address.

9. The information communications method of any one of claims 6 through 8,
wherein said step of transmitting includes transmitting a voice message as an EMail message.

10. An information communications method comprising the step of transmitting a voice message over a communications network (32) as a voice data file that is attached to an EMail message.

11. The information communications method of claim 10,
wherein a voicemail server is connected to the communications network (32).

12. The information communications method of claim 10 or 11, further comprising the step of separating the voice data file from the EMail message and converting the voice data file to a voice stream for storage in a voicemail box (50).

13. The information communications method of claim 10 or 11, further comprising the step of converting the voice data file to a voice stream for storage in a voicemail box (50).
